(19) Europäisches Patentamt

European Patent Office

Office européen des brevets

(11) **EP 0 840 139 B1**

(12) **FASCICULE DE BREVET EUROPEEN**

(45) Date de publication et mention
de la délivrance du brevet:
**16.02.2005 Bulletin 2005/07**

(51) Int Cl.⁷: **G01S 7/52**

(21) Numéro de dépôt: **97203208.0**

(22) Date de dépôt: **14.10.1997**

(54) **Procédé de traitement de signaux relatifs à un objet ayant des parties en mouvement et dispositif échographique mettant en oeuvre ce procédé**

Verarbeitungsverfahren für Signale von Objekten mit sich bewegenden Teilen und Echographie-Vorrichtung dafür

Processing method for signals from objects having moving parts and echographic device carrying out the method

(84) Etats contractants désignés:
**DE FR GB NL**

(30) Priorité: **29.10.1996 FR 9613191**

(43) Date de publication de la demande:
**06.05.1998 Bulletin 1998/19**

(73) Titulaire: **Koninklijke Philips Electronics N.V.**
**5621 BA Eindhoven (NL)**

(72) Inventeur: **Bonnefous, Odile**
**75008 Paris (FR)**

(74) Mandataire: **Charpail, François et al**
**Société Civile S.P.I.D.**
**156, Boulevard Haussmann**
**75008 Paris (FR)**

(56) Documents cités:
**EP-A- 0 674 185      US-A- 4 630 612**
**US-A- 4 660 564      US-A- 5 280 787**
**US-A- 5 360 006**

## Description

L'invention concerne un procédé de traitement de signaux, comprenant des étapes de:

acquisition (20) d'ensembles de données à partir d'une série de signaux échographiques relatifs à un organe ayant des parties de paroi en mouvement, ces ensembles étant acquis périodiquement sur une plage de temps prédéterminée; et
construction (30,100), sur la base de ces ensembles de données, de séquences d'images d'intensité. L'invention concerne également un dispositif échographique pour mettre en oeuvre ce procédé.

L'invention trouve son application dans l'industrie de l'imagerie médicale échographique.

Le domaine de l'invention est celui des outils d'aide au diagnostic en médecine cardio-vasculaire pour l'étude non invasive des anomalies des artères. Parmi les anomalies, le praticien cherche particulièrement à étudier les sténoses. Un critère de diagnostic d'une sténose est une réduction brusque du diamètre d'une artère. Un autre critère est la vitesse du sang à la sortie de la sténose. Il apparait d'après des études que le comportement du sang dans une artère sténosée ne suit pas la loi d'écoulement des fluides de Bernouilli, en ce sens que cette vitesse n'augmente pas conformément à cette loi dans la zone où le diamètre de l'artère diminue. Au contraire, la vitesse du sang diminue dès que le diamètre de l'artère atteint un seuil de rétrécissement. Il en résulte que, petit à petit, l'artère se bouche complètement dans la zone d'abord seulement étrécie, créant finalement un phénomène de thrombose. Par ailleurs, des plaques rigides peuvent aussi apparaître dans l'épaisseur des parois des artères. Ces plaques créent des changements d'élasticité des parois et provoquent des tensions si importantes à l'intérieur de la paroi que, durant le cycle cardiaque, la paroi artérielle est déformée à la limite de la rupture et peut émettre des emboles. Il existe donc dans le domaine médical, une nécessité de disposer de moyens non invasifs d'étude des artères, et en particulier des artères lésées, pour chercher une explication à ce comportement.

Un procédé de traitement de signaux échographiques et un dispositif pour mettre en oeuvre ce procédé sont déjà connus du brevet US 9,630,612 (UCHIDA et al.). Ce document décrit un procédé appliqué à des images d'intensité d'un vaisseau sanguin, qui représentent ce vaisseau en coupe transversale. Ce procédé comprend des étapes pour déterminer le diamètre du vaisseau sur une ligne échographique passant par le centre du vaisseau en coupe transversale. En particulier, les images d'intensité sont munies d'une ligne graphique, appelée curseur, qui matérialise la ligne échographique diamétrale et de repères ponctuels positionnés à l'intersection de cette ligne diamétrale et des parois internes du vaisseau. Ce procédé comprend aussi des étapes de tracking des points diamétraux pour repositionner les repères ponctuels d'une image d'intensité à une autre image d'intensité d'une séquence d'images.

Une méthode de traitement d'image pour déterminer les bords d'un organe est déjà connue du brevet US 5,360,006. Ce document concerne une méthode pour générer les bords d'un organe substantiellement circulaire, et pour déterminer le centre du cercle. A cet effet un modèle elliptique est construit, puis est utilisé pour filtrer une image d'ultrasons. Ce modèle est centré au point centre du cercle préalablement déterminé. Ce modèle est ensuite utilisé sur deux images successives, pour déterminer des histogrammes correspondants. Les histogrammes sont alors utilisés pour déduire les changements de position des bords circulaires de l'organe étudié.

Un procédé de traitement de signaux échographiques et un dispositif pour mettre en oeuvre ce procédé sont déjà connus de la demande de brevet européen publiée sous le numéro EP 0674185, sous priorité du 25-03-94 (BONNEFOUS). Le procédé connu comprend l'acquisition de données à la sortie d'un système échographique sous forme de signaux hautes fréquences acoustiques sortant d'une sonde, la formation d'une image échographique formée de lignes de pixels correspondant aux lignes de tir de la sonde, et l'application sur les signaux d'une opération de corrélation temporelle fournissant des vitesses de déplacement de structures dans l'image échographique.

En particulier le procédé proposé comprend une étape d'identification de la position d'une artère en coupe, une étape de calcul de la vitesse radiale des parois de l'artère le long des lignes de tir de la sonde échographique utilisée dans la formation de l'image, une étape de calcul de l'amplitude des mouvements propres de chaque paroi de l'artère le long des lignes de tir et une étape de calcul de la dilatation de l'artère le long des lignes de tir.

Un problème technique réside dans le fait que l'exploitation de ces données n'est pas facile, si bien que le praticien qui utilise l'image échographique comme outil d'aide au diagnostic peut difficilement en tirer profit directement. Ce problème est résolu au moyen d'un procédé selon la revendication 1. Ce procédé présente l'avantage de rendre ces données facilement accessibles, compréhensibles et exploitables par la praticien.

Un appareil d'échographie ultrasonore comprenant un dispositif d'aide au diagnostic selon la revendication 7 permet de mettre en oeuvre ce procédé. Cet appareil présente l'avantage de fournir une aide au diagnostic des anomalies des parois des artères en procurant un outil de visualisation du fonctionnement d'une artère au voisinage d'une zone suspecte, durant un cycle cardiaque.

L'invention est décrite dans des mises en oeuvre particulières en référence aux figures schématiques annexées dont la liste est donnée ci-après :

- la FIG.1 représente sous forme de blocs fonctionnels un dispositif de détermination de données graphiques associé à un appareil échographique ;
- la FIG.2 représente un histogramme Hm de l'image échographique en niveaux de gris G ;
- les FIG.3A à 3C illustrent une méthode de binarisation de l'image échographique ;
- les FIG.4A à 4C illustrent une méthode de construction de lignes graphiques superposées à une image échographique de niveaux de gris ;
- la FIG.5 montre une courbe des déplacements pariétaux D(n) d'une artère en fonction d'instants n, dans le temps.

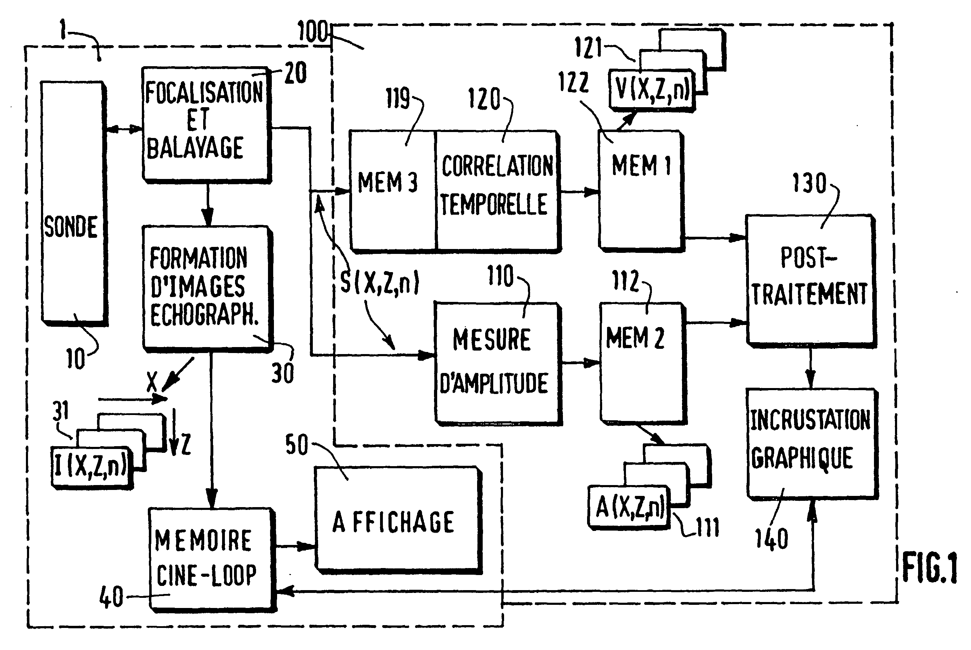

En référence à la FIG.1, un appareil d'échographie ultrasonore 1 est muni d'un dispositif d'aide au diagnostic 100. Ce dispositif composite 1,100 constitue un système de construction et d'affichage d'une séquence d'images dans laquelle des graphismes sont superposés à des images échographiques standards. Ces graphismes représentent schématiquement une partie mobile d'un organe présent dans les images de la séquence, et sont arrangés pour reproduire l'évolution du mouvement de la partie de l'organe, avec une amplitude amplifiée, sur une plage de temps prédéterminée.

Ce dispositif composite 1,100 est décrit dans une application spécifique d'aide au diagnostic de lésions des parois artérielles.

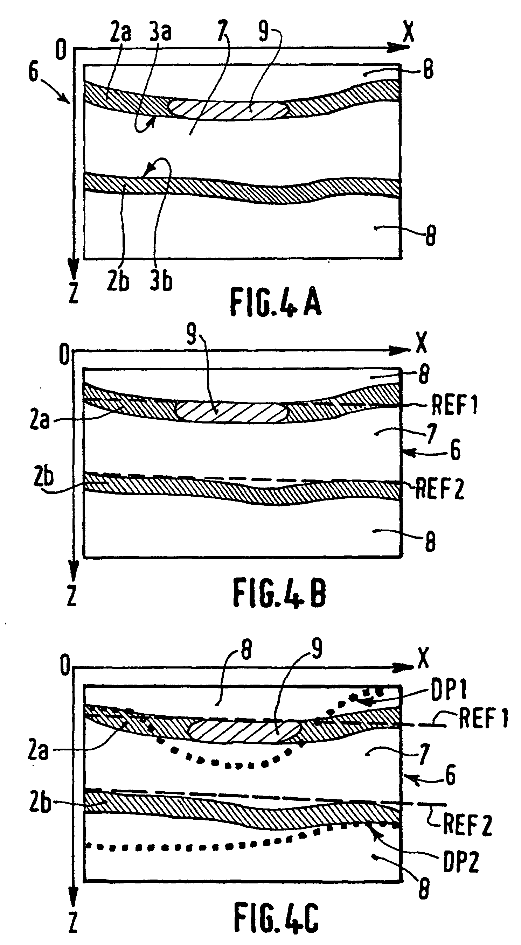

En référence à la FIG.1 et à la FIG.4A, un appareil échographique 1 met en oeuvre pour son fonctionnement, une sonde 10 en contact avec le milieu observé. Cette sonde 10 émet, par tirs périodiques, des signaux ultrasonores vers le milieu exploré, selon une direction notée OZ, et reçoit, selon la même direction OZ, des échos renvoyés par les obstacles rencontrés dans le milieu. Dans l'application envisagée, cette sonde est composée de transducteurs ultrasonores assemblés selon une barrette linéaire d'orientation notée OX. A chaque transducteurs correspond une ligne de tir.

Dans l'étape d'émission, le milieu est exploré selon les directions des lignes de tir. En réception, l'image de chaque ligne de tir est formée, en tenant compte du temps de propagation dans le milieu et de l'amplitude des échos retrodiffusés par les obstacles rencontrés sur la ligne de tir considérée. De préférence, pour obtenir une bonne résolution de cette image les tirs ultrasoniques sont focalisés en émission et en réception. A cet effet, un petit réseau de transducteurs ultrasonores adjacents est utilisé pour émettre et recevoir un faisceau ultrasonore focalisé électroniquement sur un point situé sur la ligne de tir centrale du petit réseau et à une profondeur prédéterminée Z dans le milieu. Une image d'intensité I(X,Z) 21 est donc formée par balayage de chaque ligne de tir de la sonde. L'opération 20 de focalisation et balayage de la sonde 10, fournit donc des signaux hautes fréquences acoustiques S(X,Z,n) qui permettent de construire, en fonction de l'instant n, par une opération 30, une séquence d'images d'intensité I(X,Z,n), où n est le numéro de l'image de la séquence. Les images peuvent être soit affichées directement sur un moniteur 50, soit stockées dans une mémoire d'image appelée CINE-LOOP 40, d'où elles peuvent être rappelées quand besoin est, pour un nouvel affichage.

En référence à la FIG.1, un dispositif 100 de traitement des signaux hautes fréquences fournis par l'opération 20 de focalisation et balayage de la sonde, est associé à l'appareil échographique 1, pour permettre son fonctionnement en mode graphique. Ce mode graphique permet d'observer le comportement d'une artère, et particulièrement des parois artérielles, à chaque instant d'un cycle cardiaque, lorsque l'onde pulsatile se propage à l'intérieur de l'artère considérée comme un guide d'ondes.

Sous effet de l'onde pulsatile du sang dans l'artère, durant un cycle cardiaque, les parois de l'artère sont soumises à un mouvement périodique radial dont l'amplitude et la vitesse peuvent être déterminées. Selon l'état des parois artérielles, les variations de pression induites par l'onde pulsatile créent soit une dilatation artérielle homogène, soit un mouvement pariétal distordu.

Le dispositif 100 de traitement des signaux ultrasonores comprend un processeur qui met en oeuvre des étapes de construction d'une séquence d'images incluant des lignes graphiques reproduisant les mouvements des frontières pariétales internes d'un tronçon d'artère exploré par l'appareil échographique, en chaque point balayé des frontières pariétales, et à chaque instant n d'un cycle cardiaque, selon une échelle d'amplification spatiale prédéterminée.

Ces lignes graphiques permettent de fonder le diagnostic de lésions pariétales sur la forme et sur l'amplitude des déplacements pariétaux, au lieu de fonder ce diagnostic seulement sur la vitesse d'écoulement du sang dans l'artère, et/ou sur le diamètre moyen de la lumière de l'artère dans la région lésée. Le dispositif de traitement de signaux ultrasonores 100 est un outil d'aide au diagnostic qui permet de détecter une lésion pariétale d'artère, et d'en apprécier la gravité par l'étude des déplacements des frontières pariétales par rapport à la normale. Le dispositif de traitement de signaux ultrasonores 100 associé à l'appareil échographique 1 met en oeuvre des étapes de construction et d'affichage d'une séquence d'images échographiques standards en niveaux de gris ou intensité, munies de ces lignes graphiques superposées ou incrustées reproduisant les positions des frontières pariétales internes de l'artère à chaque instant n d'un cycle cardiaque et donc simulant les mouvements de ces frontières pariétales soumises à l'onde pulsatile durant le cycle cardiaque, d'une manière facilement exploitable par un praticien.

En référence à la FIG.4A, qui est une image d'intensité échographique standard schématisée, l'observation du comportement des parois artérielles, conduit à l'exploration du milieu par la sonde échographique 10 de telle manière que l'artère est balayée longitudinalement parallèlement à OX pour fournir des images d'intensité de l'artère en coupe longitudinale en permettant la visualisation des parois antérieure 2a et postérieure 2b. La direction de la barrette de transducteurs est représentée par la direction OX, et la direction des lignes de tirs est représentée par la direction OZ. Donc l'image échographique est balayée selon des lignes de tir de direction OZ, qui sont les colonnes de l'image.

Le comportement de l'artère doit être observé sur un cycle cardiaque complet. Donc, une séquence d'un nombre N d'images couvrant une plage de temps au moins égale à un cycle cardiaque doit être construite, où N représente un nombre $1 \leq N$.

Le comportement de l'artère doit être observé relativement aux différentes phases du cycle cardiaque. Donc, un repère temporel commun à la séquence d'image et au cycle cardiaque doit être identifié.

Le comportement de l'artère doit être observé relativement à une norme. Donc, des droites graphiques de référence spatio-temporelle REF1, REF2 doivent être définies et incrustées sur les images de la séquence, où n représente un nombre $1 \leq n \leq N$.

Le comportement de l'artère doit être observé de manière qualitative. Donc des lignes graphiques formées de points doivent donner les déplacements des parois artérielles sur chaque ligne de tir d'une image de la séquence et en outre donner les déplacements à chaque instant n du cycle cardiaque, c'est-à-dire dans chaque image n de la séquence.

Le comportement de l'artère doit être observé de manière quantitative. Donc les lignes graphiques doivent donner les déplacements par rapport aux droites de référence selon une échelle spatiale prédéterminée.

Pour le tracé de ces lignes graphiques reproduisant le mouvement des parois artérielles, la vitesse et l'amplitude du déplacement des parois doivent être déterminées. Cette opération est effectuée dans le processeur 100 par une opération de corrélation temporelle 120.

Dans cette opération de corrélation temporelle 120, les échos ultrasoniques successifs produits par les structures biologiques en mouvement, et générés dans l'étape précédente de focalisation et balayage 20, sont comparés au moyen de leur fonction de corrélation. Le déplacement des structures biologiques, d'une émission ultrasonique à la suivante est estimée en tenant compte du déplacement du pic de corrélation correspondant au retard induit à la réception par ce déplacement.

L'opération de corrélation 120 fournit des mesures de vitesse de tous les objets balayés, sous la forme d'images bidimensionnelles de vitesses V(X,Z,n) notées 121 et stockées dans une mémoire 122 appelée MEM1.

L'objet du dispositif d'aide au diagnostic 100 étant fondé sur l'observation des mouvements pariétaux, une localisation des vitesses correspondant aux mouvements pariétaux est donc effectuée. Cette localisation est effectuée par une méthode 130 de traitement d'images appelée POST-TRAITEMENT comprenant une étape de détermination des localisations des parois artérielles dans des images d'amplitude d'échos A(X,Z,n) correspondantes notées 111, déterminées par une opération 110 de mesures d'amplitudes d'échos et stockées dans une mémoire 112 notée MEM2, et comprenant une étape de report des localisations des parois artérielles dans les images des vitesses 121.

Des vitesses spatiales pariétales moyennes instantanées sont alors déterminées et intégrées dans le temps pour fournir les déplacements pariétaux correspondants.

Des lignes graphiques construites dans l'opération 130, simulant les déplacements pariétaux D1 et D2 respectivement antérieur et postérieur sont incrustées dans une opération 140 dans chaque image de la séquence d'images prélevée dans la mémoire CINE-LOOP, puis stockée à nouveau dans la mémoire CINE-LOOP après incrustation.

Une configuration échographique est spécialement réalisée pour se trouver en conformité avec la plage des déplacements pariétaux. Le tronçon d'artère étudié est balayé bidimensionnellement en 20 aussi rapidement que possible et l'opération de corrélation temporelle 120 est mise en oeuvre image après image dans la séquence. La période de récurrence est prise égale à la période d'image notée $T_{FRAME}$. La plage des vitesses radiales V des parois artérielles est liée à la période d'image $T_{FRAME}$, à la fréquence ultrasonique notée $f_o$, et à la vitesse C de propagation du son dans le milieu, par la formule suivante :

$$V.T_{FRAME} = C/4\, f_o \propto 0{,}75 \text{ mm}$$

en prenant C = 1,5 mm/µs et $f_o$ = 5 MHz.

La vitesse pariétale maximale est de l'ordre de 10 mm/s. Il en résulte qu'une période d'image doit être de l'ordre de :

$$T_{FRAME} \propto 7{,}5 \text{ ms.}$$

Cette période d'image $T_{FRAME}$ correspond à un taux élevé de production d'images. Il en résulte que, pour chaque image, on n'aura pas recours à des transmissions multiples pour chaque ligne de tir de l'image échographique et qu'une seule focalisation sera utilisée en transmission. Dans le cas de l'application du dispositif 1,100 à l'observation de la vascularisation périphérique, ou à l'étude de l'artère carotide par exemple, où la profondeur de tir est inférieure à 4 cm, la fréquence de récurrence en transmission est environ 15 kHz. Le nombre de lignes de tir d'images peut être par exemple 68 avec un pas de balayage (distance entre lignes de tir) de 0,5 mm ; ou bien le nombre de lignes de tir d'images peut être 112 avec un pas de balayage de 0,25 mm. Ces caractéristiques permettent de visualiser un segment artériel de 28 mm. Le retard entre les signaux correspondant à chaque ligne de tir de l'image peut être ajusté en augmentant ou en décroissant le nombre de lignes de tir et le pas des lignes de tir.

En référence à la FIG.1, l'opération de corrélation est fondée sur le même principe que la méthode décrite dans le brevet cité au titre d'état de la technique (EP 0 674 185 - BONNEFOUS). Cependant, la présente opération de corrélation est réalisée entre les images de la séquence d'images d'où il résulte qu'il est nécessaire de disposer, en entrée du module effectuant l'opération de corrélation, d'une mémoire 119 MEM3 assez importante. Cette mémoire doit réaliser le retard nécessaire entre deux signaux corrélés. En outre, pour améliorer l'exactitude des mesures, il est préférable d'effectuer un moyennage de plusieurs fonctions de corrélations. Typiquement le nombre de corrélations est $N_c$ = 4.

Une implémentation de mémoire utilisant le principe des entrées selon les lignes, et des sorties selon les colonnes de la mémoire est plus efficace qu'un moyennage de corrélations réalisé dans l'opération de corrélation-même parce qu'il permet un calcul simultané de toutes les corrélations. La mémoire 119 MEM3 doit contenir les signaux 1bit des $N_c$ + 1 images échographiques. Toutefois la taille de cette mémoire MEM3 peut être réduite en considérant seulement dans l'image une plage d'intérêt incluant l'artère.

Pour un nombre 112 de lignes de tir d'images, sur une profondeur d'examen de 20 mm, avec une fréquence ultrasonique $f_o$ = 7,5 MHz et une fréquence d'échantillonnage $f_S$ = 30 MHz, une image correspond à 90 kbits. D'où il résulte que, avec les paramètres donnés plus haut, 450 kbits sont nécessaires pour calculer une image de vitesse. En conséquence, une mémoire de 256 ko, 50 ms, est suffisante dans l'opération de corrélation.

L'opération de corrélation, menée à bien substantiellement selon l'enseignement du document cité (EP 0674185), fournit des images 121 de vitesse V(X,Z,n). D'autre part des images 111 d'amplitude d'écho A(X,Z,n) sont également nécessaires, et sont obtenues par une opération de mesure d'amplitude 110 décrite dans le même document cité.

Les mémoires 122 MEM1 et 112 MEM2 stockent respectivement les résultats des opérations de corrélation 120 et de mesure d'amplitude 110 qui sont les images de vitesses V(X,Z,n) et les images d'amplitude d'écho A(X,Z,n) correspondantes. Il n'est pas nécessaire de stocker la valeur des pics de corrélation.

L'opération de POST-TRAITEMENT 130 est consacrée à l'exploitation des résultats des opérations précédentes 110 et 120, c'est-à-dire d'abord au calcul des vitesses pariétales. Les étapes principales de cette opération 130 sont l'extraction et la localisation des vitesses pariétales des images bidimensionnelles des vitesses. Ces étapes sont mises en oeuvre en utilisant les images d'amplitude 111 comme moyens de segmentation. Puis une étape de moyennage spatial des vitesses pariétales est mise en oeuvre en accumulant les vitesses pariétales d'une image à la suivante dans la séquence de manière à obtenir les déplacements pariétaux.

Les déplacements résultants D1, D2 sont traités pour déterminer des instants de référence n1, n2 du cycle cardiaque où les déplacements doivent être mis à zéro. Une correction est appliquée aux courbes de déplacement pour assurer un comportement cyclique de l'artère, correspondant à une position de référence spatiale fixe et stable des parois à chaque début de cycle cardiaque.

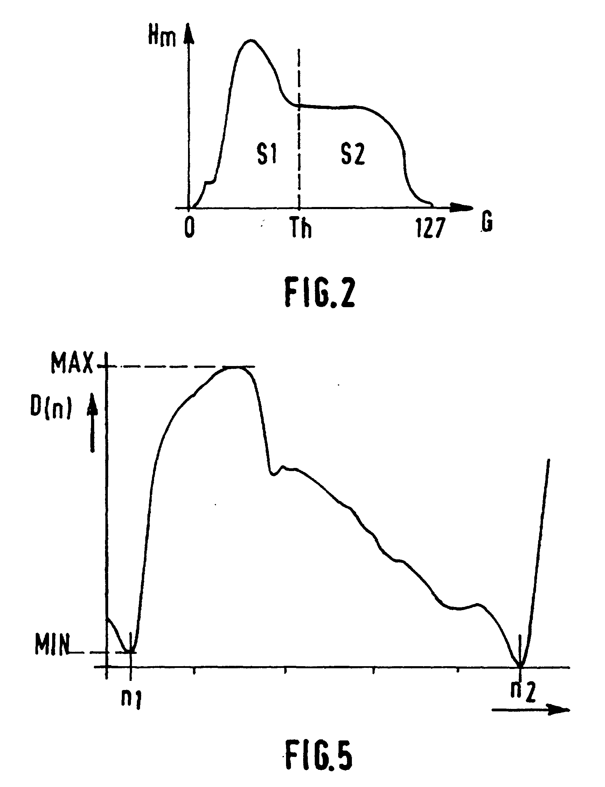

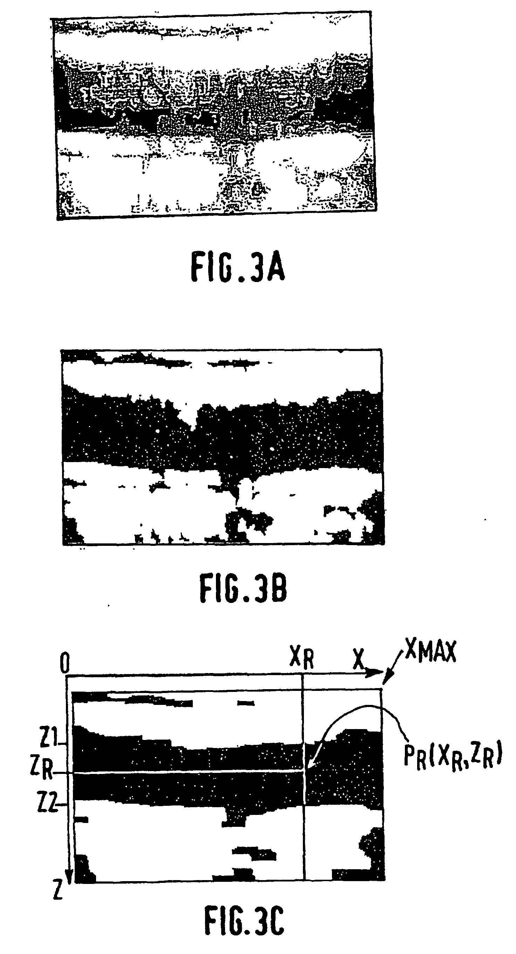

Dans l'opération de POST-TRAITEMENT 130, un seuil Th adaptable est calculé sur chaque image d'amplitude 111 A(X,Z,n) pour réaliser l'identification de la frontière pariétale interne de l'artère. Ce seuil Th est déterminé en référence à la FIG.2, en construisant un histogramme Hm(G) de chaque image d'amplitude 111 telle que représentée à titre d'exemple sur la FIG.3A. L'histogramme Hm(G) représente le nombre Hm des points de l'image ayant chaque niveau de gris G présents dans l'image, par exemple 0 à 127. L'histogramme Hm(G) est divisé en deux parties de poids égal S1 et S2. Le seuil Th correspond au niveau de gris situé à la frontière entre les parties S1 et S2.

Une implémentation possible est la suivante. On calcule la surface de l'histogramme :

$$S_m = \sum_{k=0}^{k=m} H_k$$

où m est le nombre des niveaux de gris présents dans l'image et où k est un niveau de gris de 0 à m : et on détermine une surface

$$S_p = S_m/2$$

Le seuil Th est donné par :

$$Th = \alpha \, S_p$$

où $\alpha$ est un coefficient de proportionnalité qui dépend du gain utilisé pour l'acquisition de l'image échographique.

Le seuil Th est appliqué sur les images d'amplitudes telles que représentées sur la FIG.3A. pour fournir des images binaires telles que représentées sur la FIG.3B. Une image telle que celle de la FIG.3B ne permet pas encore de déterminer les frontières pariétales, c'est-à-dire les frontières 3a et 3b telles que montrées sur la FIG.4A schématiquement entre les parois 2a, 2b et l'ouverture 7 de l'artère 6. Ainsi sur la FIG.3B, l'image binaire obtenue, où l'intérieur de l'artère est noir et l'extérieur est blanc, montre une transition noir/blanc, correspondant à ces frontières pariétales, qui est loin d'être lisse.

Un filtrage morphologique est alors appliqué sur l'image binaire pour lisser les transitions et éliminer les tâches restant dans la lumière de l'artère. Cette opération de filtrage bidimensionnel est réduite à deux opérations de filtrage monodimensionnel qui sont :

une opération d'ouverture suivie d'une opération de fermeture morphologiques le long de l'axe échographique de direction OZ, ce qui élimine les tâches occasionnellement présentes dans la lumière artérielle. La taille de l'élément structurant est de 0,75 mm ce qui correspond à 5 pixels, lorsque la fréquence d'échantillonnage de sortie est de 5 MHz ;

une opération de fermeture suivie d'une opération d'ouverture morphologiques qui assure une continuité de détection des frontières pariétales. La taille de l'élément structurant est de 1,25 mm correspondant à 5 lignes échographiques pour un pas de balayage de 0,25 mm ; la FIG.3C montre une image binaire obtenue par ces filtrages morphologiques.

En référence à la FIG.3C, dans cette image binaire filtrée, les transitions correspondant aux frontières pariétales internes sont lissées.

L'opération du POST-TRAITEMENT 130 comprend ensuite une étape de détection des frontières pariétales internes 3a, 3b. Un point de référence noté :

$$P_R \, (X_R, Z_R)$$

connu pour être situé à l'intérieur 7 de l'artère, c'est-à-dire dans la partie noire de l'image de la FIG.3C, est sélectionné comme point de départ d'un balayage de recherche des points des frontières. L'image est ainsi balayée selon les lignes de tir de direction OZ pour détecter les points situés sur ces frontières.

Dans l'image de la FIG.3C, en partant de la position de référence $(X_R, Z_R)$, le premier pixel non nul de coordonnées $[X_R, Z_1(X_R)]$ vers le haut de l'image sur la même ligne de tir est déterminé, puis de même, le premier pixel non nul de coordonnées $[X_R, Z_2(X_R)]$ vers le bas de l'image est déterminé. Ces deux points donnent les positions des frontières pariétales internes sur la ligne de tir considérée.

La même opération est appliquée aux autres lignes de l'image : pour chaque ligne vers la droite et vers la gauche de l'image, un point de référence $P_R$ sur la ligne est considéré, et les premiers points vers le haut et vers le bas de l'image, non nuls, sont détectés. Les points de référence considérés sont dérivés des frontières précédemment déterminées.

Pour un incrément à droite, $P_R$ est défini par

$$P_R \, \{X_R, \, [Z_1 \, (X_R\text{-}1) + Z_2 \, (X_R\text{-}1)]/2 \}$$

Pour un incrément à gauche. $P_R$ est défini par :

$$P_R \, \{X_R, \, [Z_1 \, (X_R\text{+}1) + Z_2 \, (X_R\text{+}1)]/2\}$$

Deux courbes $Z_1(X)$ et $Z_2(X)$ correspondant aux frontières pariétales internes 3a, 3b inférieure et supérieure sont alors disponibles. Ces courbes sont elles-mêmes filtrées pour éliminer des discontinuités locales importantes restantes des frontières pariétales, comme il apparaissait par exemple sur la FIG.3C.

L'opération de POST-TRAITEMENT 130 comprend encore une détermination des valeurs des déplacements pariétaux D1 et D2.

Pour chaque ligne de coordonnée X de chaque image n de la séquence d'images, les déplacements D1 et D2 sont calculés comme suit :

$$Z = Z1(X) + \Delta Z$$

$$D1(X, n) = \sum_{k=0}^{k=n} \sum_{z=Z_1(X)}^{z=Z_1(X) - \Delta z} V(X, Z, n)$$

$$D2(X, n) = \sum_{k=0}^{k=n} \sum_{z=Z_2(X)}^{z=Z_2(X) + \Delta z} V(X, Z, n)$$

$\Delta Z$ représente l'épaisseur de la paroi artérielle. Dans l'implémentation courante, cela correspond à environ 1 mm.

Dans la formule ci-dessus, les sommes $\Sigma$ correspondent d'abord à un moyennage des vitesses dans l'épaisseur de la paroi artérielle, donc dans l'épaisseur choisie de 1 mm, puis à une intégration temporelle des déplacements incrémentaux entre chaque récurrence d'image. L'intégration temporelle doit être corrigée par une constante déterminant la position de référence correspondant à un instant initial coïncidant avec l'instant de commencement du cycle cardiaque, où l'artère est censée être non dilatée, c'est-à-dire montrer des déplacements pariétaux nuls.

A cet effet, l'instant de début du cycle cardiaque appelé instant de référence, ou repère temporel, doit être identifié avec précision. L'instant de référence est déterminé par l'analyse des variations temporelles de la dilatation artérielle moyennée le long de l'axe artériel longitudinal (OX). Cette dilatation moyenne D(n) est calculée par la différence des déplacements des deux parois intégrée de la coordonnée X = 0 à la coordonnée X = $X_{max}$ longitudinalement

$$D(n) = \sum_{X=0}^{X=X_{MAX}} D_2(X, n) - D1(X, n)$$

La courbe D(n) est présentée sur la FIG.5. Les abscisses n1 et n2 doivent être identifiées comme des commencements de cycles cardiaques par une méthode automatique. A cet effet, sur la courbe de la FIG.5, les valeurs minimale MIN et maximale MAX sont détectées, et une fonction f(n) est calculée à partir de ces détections. La fonction f(n) est définie par :

$$\text{Si } [D(n) - MIN]/(MAX-MIN) > D_0 \text{ alors } f(n) = 0$$

Autrement,

$$f(n) = 1$$

Il en résulte que la fonction f(n) valide les segments de courbe D(n) inférieurs à une valeur prédéterminée $D_0$. Sur chacun de ces segments, des valeurs minimales de D(n) sont déterminées et les instants correspondants, n1, n2 sont stockés. Ces instants n1 et n2 sont supposés correspondre aux commencements de cycles cardiaques successifs.

Un cycle cardiaque étant ainsi défini par les instants n1 et n2, les courbes de déplacement D1(X,n) et D2(X, n) sont corrigées de la manière suivante :

$$d1(X,n) = D1(X,n)-D1(x,n1)-\frac{(n-n1)}{(n2-n1)}[D1(X,n2)-D1(X,n1)]$$

$$d2(X, n) = D2(X,n)-D2(x,n1)-\frac{(n-n1)}{(n2-n1)}[D2 (X,n2)-D2(X,n1)]$$

Après ces corrections, les déplacements pariétaux D1 et D2 peuvent être représentés par rapport à des positions de référence spatiale correspondant aux repères temporels de commencements des cycles cardiaques.

En référence aux FIG.4B et 4C, l'opération 140 effectue l'incrustation graphique de courbes correspondant aux déplacements pariétaux D1 et D2 et de droites de référence notées REF1 et REF2 sur les images échographiques standards ou images d'intensité I(X,Z,n) correspondantes qui sont stockées dans la mémoire CINE-LOOP. Les droites de référence REF1 et REF2 sont dérivées des courbes de frontières pariétales extraites des images d'amplitude et correspondant au commencement du premier cycle cardiaque de la séquence d'image, et sont calculées par une méthode de régression linéaire connue en soi.

En référence aux FIG.4B et 4C, chaque image n de la séquence est munie de droites de référence REF1, REF2 et de lignes DP1, DP2 représentant le déplacement de chaque point des frontières pariétales à l'instant n. Les images de la séquence sont à nouveau stockées dans la mémoire CINE-LOOP pour être affichées sur le dispositif d'affichage 50.

Lors du déroulement de la séquence sur le dispositif d'affichage 50, le praticien peut évaluer qualitativement et quantitativement les distorsions ou non-distorsions des lignes graphiques simulant les déplacements des parois et en déduire la présence et la gravité de sténoses, ou de défauts d'élasticité, liés aux parois artérielles de l'image échographique sous-jacente. La visualisation de la dilatation artérielle en temps réel, néanmoins retardée d'une seconde pour pouvoir identifier les instants correspondant aux débuts de cycle cardiaque et corriger les déplacements, permet aussi d'optimiser la position de la sonde échographique pour obtenir un plan de coupe passant par l'axe artériel parallèle à OX.

L'invention a été décrite ci-dessus relativement au traitement de signaux échographiques mais elle peut être appliquée au traitement de signaux de nature différente : électrique, électromagnétique,... etc

## Revendications

1. Procédé de traitement de signaux, comprenant des étapes de:

   acquisition (20) d'ensembles de données à partir d'une série de signaux échographiques relatifs à un organe ayant des parties de paroi en mouvement, ces ensembles étant acquis périodiquement sur une plage de temps prédéterminée; et
   construction (30,100), sur la base de ces ensembles de. données, de séquences d'images bidimensionnelles d'intensité (I(X,Z,n));

   **caractérisé en ce que** les étapes d'acquisition et construction comprennent la formation d'une séquence d'images d'intensité qui représente l'objet en coupe longitudinale avec des parois longitudinales dans les images bidimensionnelles; et
   **caractérisé en ce que** ce procédé comprend en outre des étapes de construction de séquences correspondantes d'images bidimensionnelles de représentations graphiques des dites parois longitudinales, incluant:

   une ou plusieurs ligne(s) graphique(s) qui reproduisent dynamiquement, à une échelle donnée, les mouvements transversaux et longitudinaux des dites partie(s) de paroi d'organe longitudinales, et
   un ou des lignes graphiques de repère(s) spatio-temporel(s);
   et incrustation des dites lignes graphiques des dites parois longitudinales dans les images bidimensionnelles d'intensité en coupe longitudinale.

2. Procédé selon la revendication 1, selon lequel dans l'étape de construction des séquences correspondantes d'images de représentations graphiques, les lignes graphiques longitudinales sont construites sur la base de traitement d'information de vitesses de déplacement, de localisation, et de valeurs de déplacements de ladite ou des dites parties de parois longitudinales en mouvements transversaux et longitudinaux.

3. Procédé selon l'une des revendications 1 ou 2, selon lequel les lignes graphiques de repère représentent les parois longitudinales (3a,3b) en mouvement de l'organe dans une position de référence (REF1,REF2) formant le repère spatio-temporel, et/ou dans leur mouvement amplifié (DP1,DP2) à l'échelle donnée.

4. Procédé selon l'une des revendications 1 à 3, selon lequel l'organe (6) est un tronçon d'artère exploré selon son axe longitudinal (OX), et les parties (3a, 3b) de paroi en mouvement dudit organe, représentées schématiquement par une ou des lignes graphiques, sont les frontières pariétales internes du dit tronçon d'artère.

5. Procédé selon la revendication 4, comprenant dans l'étape (100) de construction de lignes graphiques des opérations de:

    stockage (40) des images d'intensité dans une mémoire inscriptible et lisible (CINE-LOOP (R) ),
    corrélation (120), pour fournir une séquence d'images des vitesses [V(X,Z,n)] des frontières pariétales du tronçon d'artère,
    mesure d'amplitude (110) des signaux échographiques pour fournir une séquence d'images d'amplitudes [A(X,Z,n)] correspondantes,
    POST-TRAITEMENT (130) incluant une détermination des localisations des frontières pariétales internes [Z1(X), Z2(X)] dans les images d'amplitude [A(X,Z,n)], un report des localisations des dites frontières pariétales dans les images de vitesse [V(X,Z,n)] correspondantes, et une construction des lignes graphiques à partir des localisations desdites frontières pariétales,
    et incrustation des dites lignes graphiques dans les images d'intensité [I(X,Z,n)] pour fournir une séquence d'images d'intensité incrustées incluant des lignes graphiques reproduisant les mouvements des frontières pariétales internes du dit tronçon d'artère exploré de manière longitudinale, en des points des frontières pariétales, et aux N instants d'un cycle cardiaque formant la plage de temps, selon une échelle spatiale d'amplification prédéterminée.

6. Procédé selon la revendication 5, comprenant dans l'opération de POST-TRAITEMENT (130), une étape de détermination des déplacements [D1(X,n), D2(X,n)] des frontières pariétales à partir des vitesses radiales [V(X,Z,n)] desdites frontières pariétales, incluant une détermination d'une constante de correction des déplacements pariétaux fournissant une position de référence correspondant à un instant de commencement d'un cycle cardiaque, représentant ledit repère temporel, et une étape de détermination de la localisation des frontières pariétales incluant une binarisation des images d'amplitude (A(X,Z,n), et une détermination des points frontières comme les points de transition selon un seuil (Z1(X), Z2 (X)) entre les points intérieurs (7) à l'artère, dans les images binarisées, et les autres points.

7. Appareil d'échographie ultrasonore (1) comprenant un dispositif d'aide au diagnostic, mettant en oeuvre un procédé de traitement de signaux échographiques, ayant un système (100) de construction d'une séquence d'images d'intensité [I(X,Z,n)] représentant un organe ayant des parties de paroi longitudinales en mouvement (6), dans lesquelles des lignes graphiques longitudinales (REF1,REF2;DP1,DP2) sont incrustées et arrangées pour reproduire l'évolution des mouvements des dites parties de paroi d'organe, avec une amplitude spatiale amplifiée, sur un cycle cardiaque, et comprenant un dispositif de visualisation d'images avec un système d'affichage de cette séquence d'images d'intensité incrustées.

8. Appareil selon la revendication 7, dans lequel le système de construction (100) d'images d'intensité incrustées comprend des modules de construction de lignes graphiques longitudinales représentant schématiquement des parties en mouvement de l'organe dans une position de référence et/ou dans leurs mouvements transversaux et longitudinaux à chaque instant (n), spatialement amplifié selon une échelle prédéterminée.

9. Appareil selon la revendication 8, comprenant une sonde (10) de transducteurs ultrasonores, qui par l'exploration longitudinale du dit organe (6), fournit une série de signaux échographiques standards à un module de construction (30) d'une séquence d'images d'intensité de cet organe et à une mémoire d'image (CINE-LOOP 40) lisible et inscriptible, appareil dans lequel le système (100) de construction d'images d'intensité incrustées comprend :

    des modules (MEM3, 120, MEM1) pour mettre en oeuvre une étape de corrélation temporelle et pour fournir et stocker une séquence d'images des vitesses,
    des modules (110, MEM2) pour mettre en oeuvre une étape de mesure d'amplitudes échographiques et pour fournir et stocker une séquence correspondante d'images d'amplitudes,
    un module de POST-TRAITEMENT (130) qui à partir des images correspondantes d'amplitudes et de vitesse, localise les vitesses sur des parties en mouvement de l'organe, détermine les déplacements correspondants et construit des courbes graphiques de ces déplacements,

un module d'incrustation graphique (140) qui incruste lesdites courbes graphiques sur les images de la séquence stockée dans la mémoire d'image (CINE-LOOP 40), et, parmi ces courbes, des lignes de 40 référence (REF1, REF2) et des courbes de déplacements (DP1, DP2).

**Claims**

1. A signal processing method which includes steps
   of acquiring (20) data sets based on a series of echographic signals that relate to an organ that has moving wall parts, these data sets being acquired periodically over a predetermined time range; and
   of constructing (30, 100) sequences of two-dimensional intensity images (I(X, Z, n)) on the basis of these data sets;
   **characterized in that** the acquisition and construction steps comprise the formation of a sequence of intensity images that represents the object in longitudinal section with longitudinal walls in the two-dimensional images; and
   **characterized in that** this method further includes construction steps of constructing corresponding two-dimensional image sequences of graphical representations of said longitudinal walls, including:

   one or various graphics line(s) which dynamically reproduce at a given scale the transversal and longitudinal movements of said longitudinal wall part(s) of the organ, and
   one or more graphics spatio-temporel marker lines; and
   superpositioning of said graphics lines of said longitudinal walls in the two-dimensional intensity images in longitudinal section.

2. A method as claimed in claim 1, in which in the construction step
   of constructing corresponding image sequences of graphical representations, the longitudinal graphics lines are constructed based on the processing of information of velocities of displacement, of localization, and of displacement values of said longitudinal wall parts in transversal and longitudinal movements.

3. A method as claimed in one of the claims 1 or 2, in which the graphics marker lines represent the longitudinal walls (3a, 3b) during movements of the organ in a reference position (REF1, REF2) which form the spatio-temporal marker and/or in their amplified movement (DP1, DP2) at the given scale.

4. A method as claimed in one of the claims 1 to 3 in which the organ (6) is an artery segment examined along its longitudinal axis (OX), and the moving wall parts (3a, 3b) of said organ, diagrammatically shown by one or more graphics lines, are the internal parietal boundaries of said artery segment.

5. A method as claimed in claim 4, comprising in step (100) of constructing graphics lines including the operations of:

   storage (40) of the intensity images in a read/write memory (CINE-LOOP (R),
   correlation (120), to produce a sequence of velocity images [V(X,Z,n)] of the parietal boundaries of the artery segment,
   measurement (110) of the amplitude of the echographic signals, to supply a sequence of corresponding amplitude images [A(X,Z,n)],
   post-processing (130), including determination of the locations of the internal parietal boundaries [$Z_1$(X), $Z_2$(X)] in the amplitude images [A(X,Z,n)], a transfer of the locations of said parietal boundaries to the corresponding velocity images [V(X,Z,n)], and a construction of graphics lines on the basis of the locations of said parietal boundaries,
   and superpositioning of said graphics lines in the intensity images [I(X,Z,n)], to supply a sequence of superimposed intensity images which include graphics lines reproducing the movements of the internal parietal boundaries of said longitudinally examined artery segment, at parietal boundary points, and at the N instants of a cardiac cycle forming the time interval, according to a predetermined spatio-amplification scale.

6. A method as claimed in claim 5, in which the post-processing operation (130) comprises a step of determining the displacements [D1(X,n), D2(X,n)] of the parietal boundaries on the basis of the radial velocities [V(X,Z,n)] of said parietal boundaries, including determining a correction constant for the parietal displacements, yielding a reference position that corresponds to a starting instant of a cardiac cycle, representing said temporal marker, and a step of determining the location of the parietal boundaries, including digitization of the amplitude images (A(X,Z,n)), and determination of the boundary points as the transition points according to a threshold ($Z_1$(X), $Z_2$(X)) between the

points inside (7) the artery, in the digitized images, and the other points.

**7.** An ultrasonic echographic apparatus (1), comprising a diagnostic tool carrying out an echographic signal processing method which is provided with a system (100) for constructing a sequence of intensity images [I(X,Z,n)] which represent an organ with longitudinal moving wall parts (6), in which longitudinal graphics lines (REF1, REF2; DP1, DP2) are superimposed and arranged to reproduce the evolution of the movements of said parts of the organ wall, with an amplified spatial amplitude, over a cardiac cycle, and also comprising a system for displaying images with a display system for displaying this sequence of superimposed intensity images.

**8.** An apparatus as claimed in claim 7, in which the system (100) for the construction of superimposed intensity images includes modules for the construction of longitudinal graphics lines which diagrammatically represent one or more moving parts of the organ in a reference position and/or in its (their) transversal and longitudinal movements at each instant (n), spatially amplified according to a predetermined scale.

**9.** An apparatus as claimed in claim 8, comprising a probe (10) with ultrasonic transducers which applies, by exploration of said organ (6), a series of standard echographic signals to a module (30) for the construction of a sequence of intensity images of said organ and to a read/write image memory (CINE-LOOP), in which apparatus the system (100) for constructing superimposed intensity images comprises:

modules (MEM3, 120, MEM1) for carrying out a temporal correlation step and for supplying and storing a sequence of velocity images,
modules (110, MEM2) for carrying out a step for measuring echographic amplitudes and for supplying and storing a corresponding sequence of amplitude images,
a post-processing module (130) which localizes, on the basis of the corresponding velocity and amplitude images, the velocities on the moving parts of the organ, determines the corresponding displacements and constructs graphic curves of these displacements,
a graphics superpositioning module (140) which superimposes said graphics curves on the images of the sequence stored in the image memory (CINE-LOOP 40) and, among these curves, reference curves (REF1, REF2) and displacement curves (DP1, DP2).

## Patentansprüche

**1.** Verfahren zur Verarbeitung von Signalen mit Schritten zur:

- Erfassung (20) von Dateneinheiten ausgehend von einer Serie von Echographiesignalen in Bezug auf ein Organ mit Teilen seiner Wand in Bewegung, wobei diese Einheiten periodisch über einen vorbestimmten Zeitbereich erfasst werden; und
- Konstruktion (30, 100) auf der Basis dieser Dateneinheiten von zweidimensionalen Intensitätsbildsequenzen (I ('X,Z,n));

**dadurch gekennzeichnet, dass** die Schritte zur Erfassung und Konstruktion den Aufbau einer Intensitätsbildsequenz enthalten, die das Objekt in den zweidimensionalen Bildern im Längsschnitt mit den Wänden in Längsrichtung darstellt; und
**dadurch gekennzeichnet, dass** dieses Verfahren außerdem Schritte für den Aufbau von Sequenzen entsprechend zweidimensionalen Bildern von graphischen Darstellungen der besagten Wände in Längsrichtung enthält mit:

- Einer oder mehreren graphischen Linie(n) in einem bestimmten Maßstab, die die Quer- und Längsbewegungen des (der) besagten Teil(e) der Organwand in Längsrichtung dynamisch reproduziert(en), und
- einer oder mehreren spatio-temporalen Bezugspunkt-Graphiklinie(n); und
- einer Verankerung der besagten Graphiklinien der besagten Wände in Längsrichtung in den zweidimensionalen Intensitätsbildem im Längsschnitt.

**2.** Verfahren nach Anspruch 1, nach dem im Schritt zum Aufbau der Sequenzen entsprechend Bilder graphischer Darstellungen die Graphiklinien in Längsrichtung auf der Grundlage der Informationsverarbeitung der Versetzungsgeschwindigkeiten, der Lokalisation und der Versetzungenwerte des besagten oder der besagten Wändeteils(e) in Längsrichtung in quer und längs verlaufenden Bewegung aufgebaut werden.

**3.** Verfahren nach einem der Ansprüche 1 oder 2, nach dem die Bezugspunkt-Graphiklinien Wände des Organs in Längsrichtung (3a,3b) in Bewegung in einer Referenz-position (REF1,REF2), welche die spatio-temporalen Bezugspunkte bildet, und/oder in ihrer verstärkten Bewegung (DP1,DP2) in einem bestimmten Maßstab darstellen.

**4.** Verfahren nach einem der Ansprüche 1 bis 3, nach dem das Organ (6) ein in seiner Längsachse (OX) analysierter Arterienabschnitt ist, und die Teile (3a, 3b) der Wand in Bewegung des besagten Organs, schematisch mit einer oder mehreren Graphiklinien dargestellt, die inneren parietalen Grenzen des besagten Arterienabschnitts sind.

**5.** Verfahren nach Anspruch 4, mit in dem Schritt (100) für den Aufbau der Graphiklinien der Operationen zur:

- Speicherung (40) der Intensitätsbilder in einem Schreib-Lese-Speicher (CINE-LOOP (R)),
- Korrelation (120), um eine Bildsequenz der Geschwindigkeiten [V (X,Z,n)] der parietalen Grenzen des Arterienabschnitts zu liefern,
- Amplitudenmessung (-110) der Echographiesignale, um eine entsprechende Bildsequenz der Amplitude [A (X,Z,n)] zu liefern,
- NACHVERARBEITUNG (130) mit einer Bestimmung der Lokalisationen der inneren parietalen Grenzen [Z1 (X), Z2 (X)] in den Amplitudenbildern [A (X,Z,n)], einer Übertragung der Lokalisationen der besagten parietalen Grenzen auf die entsprechenden Geschwindigkeitsbilder [V (X, Z,n)] und einem Aufbau der Graphiklinien ausgehend von den Lokalisationen der besagten parietalen Grenzen, und
- Verankerung der besagten Graphiklinien in den Intensitätsbildern [I (X,Z,n)], um eine Bildsequenz verankerter Intensität mit Graphiklinien zur Reproduktion der Bewegungen der innerer parietalen Grenzen des besagten in Längsrichtung analysierten Arterienabschnitts an Punkten der parietalen Grenzen und in den N Zeitpunkten eines den Zeitbereich bildenden Herzzyklus entsprechend einem vorbestimmten räumlichen Vergrößerungsmaßstab zu liefern.

**6.** Verfahren nach Anspruch 5, mit in der Operation der NACHVERARBEITUNG (130) einem Schritt zur Bestimmung der Versetzungen [D1 (X,n), D2 (X,n)] der parietalen Grenzen ausgehend von den radialen Geschwindigkeiten [V (X,Z,n)] der besagten parietalen Grenzen mit einer Bestimmung einer Konstanten zur Korrektur der parietalen Versetzungen für den Erhalt einer Referenzposition entsprechend einem Zeitpunkt am Anfang eines Herzzyklus zur Darstellung des besagten Zeitpunkts und einem Schritt zur Bestimmung der Lokalisation der parietalen Grenzen mit einer Binärisierung der Amplitudenbilder (A(X,Z,n) sowie einer Bestimmung der Grenzpunkte als Übergangspunkte entsprechend einem Grenzwert (Z1(X), Z2 (X) zwischen den inneren Punkten (7) der Arterie in den binärisierten Bildern und den anderen Punkten.

**7.** Ultraschall-Echographiegerät (1) mit einer Vorrichtung für die Diagnostikhilfe, welches ein Verfahren zur Verarbeitung von Echographiesignalen mit einem System (100) für den Aufbau einer Intensitätsbildsequenz [I (X,Z,n)] zur Darstellung eines Organs mit Teilen einer Längswand in Bewegung (6) verwendet, in denen Graphiklinien in Längsrichtung (REF1,REF2;DP1,DP2) verankert und angeordnet sind, um die Entwicklung der Bewegungen der besagten Teile der Organwand mit einer verstärkten räumlichen Amplitude über einen Herzzyklus zu reproduzieren, und mit einer Vorrichtung zur Bildanzeige mit einem System zur Anzeige dieser verankerten Intensitätsbildsequenz.

**8.** Gerät nach Anspruch 7, in dem das System zum Aufbau (100) der verankerten Intensitätsbilder Module für den Aufbau von Graphiklinien in Längsrichtung zur schematischen Darstellung der Teile in Bewegung des Organs in einer Referenzposition und/oder in ihren quer und längs verlaufenden Bewegungen in jedem Zeitpunkt (n) und nach einem vorbestimmten räumlich vergrößerten Maßstab enthält.

**9.** Gerät nach Anspruch 8, mit einer Sonde (10) aus Ultraschall-Transducern, die bei der Untersuchung in Längsrichtung des besagten Organs (6) eine Serie von Standard-Echographiesignalen an ein Modul zum Aufbau (30) einer Intensitätsbildsequenz dieses Organs und an einen Lese-Schreib-Bildspeicher (CINE-LOOP 40 liefert, wobei in dem Gerät das System (100) zum Aufbau der verankerten Intensitätsbilder enthält:

- Module (MEM3, 120, MEM1) zur Umsetzung eines temporalen Korrelationsschritts und zur Ausgabe und Abspeicherung einer Sequenz von Geschwindigkeitsbildern,
- Module (110, MEM2) zur Umsetzung eines Schritts der echographischen Amplitudenmessung und zur Ausgabe und Abspeicherung einer entsprechenden Sequenz von Amplitudenbildern,
- ein Modul zur NACHVERARBEITUNG (130), das, ausgehend von Amplituden und Geschwindigkeit entsprechenden Bildern die Geschwindigkeiten der Teile in Bewegung des Organs lokalisiert, die entsprechenden Versetzungen bestimmt und graphische Kurven dieser Versetzungen konstruiert, und

- ein Modul zur graphischen Verankerung (140), welches die besagten graphischen Kurven in den Bildern der im Bildspeicher (CINE-LOOP 40) abgelegten Sequenz und unter diesen Kurven Referenzlinien 40 (REF1, REF2) und Versetzungskurven (DP1, DP2) verankert.

FIG.1

EP 0 840 139 B1

**FIG.2**

**FIG.5**

FIG.3A

FIG.3B

FIG.3C

FIG.4 A

FIG.4 B

FIG.4 C